# FASCICULE DE BREVET EUROPEEN

(11) **EP 1 871 205 B1**
(45) Date de publication et mention de la délivrance du brevet: **07.04.2010**
(21) Numéro de dépôt: 05823058.2
(22) Date de dépôt: 28.11.2005
(51) Int. Cl.: A47J 37/07

(54) **BARBECUE À DOUBLE FOYERS VERTICAUX**
SICHERHEITSGRILL MIT DOPPELTER VERTIKALER FEUERKAMMER
DOUBLE VERTICAL FIREBOX SAFTEY BARBECUE

(30) Priorité: 29.11.2004 FR 0412613
(43) Date de publication de la demande: 02.01.2008
(73) Titulaire: Indust Design, 95000 Neuville Sur Oise (FR)
(72) Inventeur: MICHEL, Aude, F-78740 Evecquemont (FR); MICHEL, Luc, F-78740 Evecquemont (FR)
(74) Mandataire: Prieur, Patrick
(86) Numéro de dépôt international: PCT/FR2005/002946
(87) Numéro de publication internationale: WO 2006/056703

(56) Documents cités:
- WO-A-02/067740
- BE-A3- 1 011 914
- DE-A1- 3 320 677
- US-A- 3 742 838
- US-A- 4 627 410
- US-A- 6 082 351

## Description

La présente invention concerne un barbecue destinée à la cuisson d'aliments à double ensemble de foyers verticaux positionnés, de manière préférentielle, longitudinalement et réglables en largeur, lesdits foyers ayant chacun une seule face de cuisson en vis-à-vis des aliments à cuire. Ledit barbecue peut être muni d'une paroi de protection. La présente invention concerne également une voûte qui relie les deux foyers verticaux, des extensions rabattables automatiquement sous le poids d'une surcharge et enfin un allumage à gaz amovible. Ce barbecue privilégie la santé, la sécurité et le plaisir.

On entend par double ensemble de foyers les parois extérieures avec les containers à combustibles -c'est-à-dire les foyers- avec une face avant réglable plus éventuellement un ensemble de volets constituant une voûte.

Traditionnellement, les barbecues sont constitués d'un foyer horizontal, la nourriture étant placée au dessus de la source de chaleur ou foyer. Ceci a pour inconvénient de permettre aux graisses d'atteindre les braises ou éléments chauffants, ce qui génère des matières toxiques qui viennent se déposer sur la nourriture et entraîne la formation de flammes qui viennent elles-mêmes détériorer la nourriture. Ainsi, ceci est néfaste pour le goût de la nourriture et entraîne des risques pour la santé en développant sur la nourriture des composés fortement cancérigènes.

De plus, les graisses et les jus de cuisson qui atteignent des parties chaudes génèrent des fumées et des odeurs créant des nuisances pour l'environnement et le voisinage.

Aussi, deux alternatives pour résoudre ces problèmes ont été proposées jusqu'à présent. Les barbecues confinés dans une enceinte fermée et les barbecues à foyer vertical.

Les barbecues à enceintes fermés permettent de contrôler l'apparition des flammes et de faire de la cuisson indirecte avec un récipient interposé entre la source de chaleur et les aliments. Cependant, une telle configuration empêche l'évacuation de fumée et goudrons engendrés par la cuisson et de ce fait contamine les éléments.

Les barbecues à foyer vertical permettent aux graisses de ne pas tomber directement sur le combustible et donc ne génèrent ni flamme ni composés dangereux. D'autre part, les fumées n'atteignent pas les aliments.

Le document BE-A-1 011 914 divulgue un barbecue comprenant un châssis et deux ensembles de foyers verticaux dont l'un au moins est réglable en largeur par rapport au châssis, lesdits ensembles de foyers ayant chacun une seule face de cuisson en vis-à-vis des aliments à cuire.

Par ailleurs, le document DE-A-33 20 677 divulgue un barbecue à combustible solide conformément au préambule de la revendication 1.

L'invention vise à améliorer la qualité et la sécurité de la cuisson procurée par le barbecue. A cet effet, conformément à l'invention, lesdits ensembles de foyers comprennent en outre chacun une paroi de protection non-ajourée, isolée, non directement en contact avec le container et s'étendant en regard de la face arrière non-ajourée du container.

Ainsi, on assure une isolation efficace des foyers vis-à-vis du milieu environnant et on réduit le risque de brûlure des personnes par contact inopiné avec une paroi chaude ou avec les produits de combustion.

L'invention visent en outre à remédier à des inconvénients qui peuvent se présenter avec les barbecues de l'art antérieur, tels que la répartition de la chaleur n'est pas uniforme, les aliments cuisent essentiellement par rayonnement direct entraînant un temps de cuisson plus long et il est difficile de contrôler, dans le cas d'utilisation de combustible solide tel que le charbon de bois, l'écoulement du combustible et donc la régularité de la cuisson. Par ailleurs, de tels barbecues ne permettent pas d'ajuster la quantité de combustibles à la quantité de nourriture à cuire et ne sont donc pas économiques.

D'autre part, aucune de ces réalisations ne procure un niveau de sécurité satisfaisant pour les risques de brûlures lors de la mise en oeuvre du barbecue.

Sur tous les appareils existants, à combustible solide, en général il reste en fin de cuisson une quantité non négligeable de charbon de bois et de braises non brûlées que l'on laissera se consumer sans utilisation. Par ailleurs, l'utilisation du barbecue allant de paire avec l'idée de manger dehors, en mi-saison ou même en plein été, en soirée, la température peut descendre assez vite obligeant alors les convives à se couvrir ou les maîtres de cérémonie à mettre en oeuvre des chauffages extérieurs du type parasols chauffant radiant gaz. Ceci augmente considérablement les investissements, la place de rangement, la logistique des bouteilles de gaz et les risques d'accidents dus à la maintenance approximative de ces équipements.

Ainsi, la présente invention se propose de résoudre le problème consistant d'une part à préserver le goût des aliments, préserver également la qualité des aliments quelque soit le mode de cuisson employé, c'est-à-dire que les aliments ne subissent ni transformations chimiques ni transformations physiques néfastes à la santé, tout en permettant une mise en oeuvre rapide du barbecue et une cuisson rapide des aliments et d'autre part en assurant une bonne sécurité aux utilisateurs dudit barbecue une limitation des nuisances et enfin une consommation d'énergie adaptée à la quantité de nourriture à cuire.

De plus, en fin de cuisson, ou à n'importe quel moment, ce barbecue peut être transformé en une cheminée d'extérieur et en un chauffage radiant de grande taille pouvant chauffer toute la table en utilisant dans le cas de combustible solide le charbon de bois ou le bois non brulé au court de la cuisson.

Aussi, ledit barbecue est constitué de foyers verticaux permettant aux graisses de s'écouler dans des récupérateurs et ainsi de ne jamais toucher les éléments chauffants. Les aliments ne sont par ailleurs jamais touchés ni par les flammes, ni par les fumées, ni par les gaz de combustion.

Tous les composants qui peuvent être souillés par des résidus de cuisson sont amovibles et dimensionnés pour être lavés au lave vaisselle permettant ainsi d'éliminer entre chaque utilisation les résidus divers qui peuvent être nocifs pour la santé.

Ladite invention est constitué de deux foyers constitués chacun d'une seule face de cuisson en vis-à-vis des aliments à cuire. Par ailleurs, l'écartement entre les deux foyers est variable et le positionnement de la nourriture vis-à-vis de ces foyers est lui-même variable. Aussi cette invention permet d'obtenir une température contrôlée et homogène.

D'autre part, ledit barbecue est globalement en enceinte ouverte permettant ainsi aux fumées et au gaz de combustion de s'échapper sans rentrer en contact avec les aliments. Toutefois, des volets formant une voûte entre les deux foyers et fermant les côtés entraînent la réflexion des rayonnements infrarouges et permettent une répartition plus homogène de la chaleur évitant les déperditions et entraînant ainsi le contrôle et l'homogénéisation de la température.

Ladite invention limite ainsi les risques pour la santé engendrés par les barbecues tels que décrits dans l'art antérieur. De plus, un tel barbecue à doubles foyers verticaux permettant que les graisses et jus de cuisson ne tombent pas sur les braises ou éléments chauffants limité énormément les fumées et les odeurs respectant ainsi l'environnement et le voisinage.

Ladite invention limite ainsi les nuisances engendrées par les barbecues tels que décrits dans l'art antérieur.

Ladite invention à doubles foyers verticaux positionnés longitudinalement et réglables en largeur ainsi que la voûte de cuisson permet une cuisson plus rapide des aliments et même par temps humide. Par ailleurs, la partie supérieure du container qui constitue le foyer reste ouverte et est largement évasée de manière à faciliter le chargement en combustible durant la cuisson, la voûte évitant simultanément que le combustible que l'on ajoute se répande sur les aliments. D'autre part, tous les éléments susceptibles d'être en contact avec les aliments ou les résidus de cuisson sont amovibles et dimensionnés pour entrer dans un lave-vaisselle facilitant ainsi l'utilisation dudit barbecue. La présence d'un allumage à gaz permet l'allumage rapide du barbecue même par temps humide.

Ladite invention permet ainsi une mise en oeuvre rapide du barbecue et une cuisson rapide des aliments.

L'invention constituée de deux foyers verticaux chacun munis d'une seule face de cuisson en vis-à-vis des aliments à cuire et la voûte limite l'accès aux éléments chauds. Par ailleurs, ledit barbecue est muni de foyers verticaux qui ne sont pas directement accessibles de l'extérieur grâce à la présence d'une paroi de protection isolée des sources de chaleur par un isolant tel que l'air. Ainsi l'ensemble des parois extérieur du barbecue reste à température convenable et limite ainsi les risques de brûlure. Enfin, ce barbecue peut-être monté sur un chariot qui est réalisé de manière à être très stable. Ce chariot peut être muni d'extensions qui se rabattent automatiquement sous l'effet de surcharge évitant ainsi le basculement intempestif du barbecue par exemple sous le poids d'un enfant se pendant à l'extrémité de l'une des extensions.

Ladite invention limite ainsi les risques d'accidents domestiques engendrés par les barbecues tels que décrit dans l'art antérieur.

Par ailleurs, ledit barbecue est constitué de foyers compartimentés ou comporte plusieurs éléments de chauffe pouvant être utilisés séparément ou en combinaison afin de moduler la surface de chauffe, Dans le cas de combustibles solides, la surface chauffante ou rayonnante constituant la grille des foyers peut également être déplacée afin de faire varier l'épaisseur des containers qui constituent les foyers ce qui permet de faire varier la quantité de combustible. De telles réalisations combinées à la possibilité de recharger le combustible en cours de cuisson permettent ainsi la mise en oeuvre économique de l'invention.

Enfin, ledit barbecue comprend un ensemble foyer ou foyer qui peut coulisser sur toute la largeur et un ensemble foyer ou foyer articulé sur un ou plusieurs axes verticaux permettant à cet ensemble foyer de pivoter d'approximativement 180°, les deux ensembles foyers ou foyers étant alors côte à côte, approximativement alignés, constituant un ensemble de panneaux radiants formant un grand et confortable chauffage d'extérieur ou une cheminée d'extérieur dans le cas de combustible solide.
La figure **1** représente une vue éclatée des principales pièces du corps du barbecue.
La figure **2** représente une coupe du corps du barbecue et principalement des foyers.

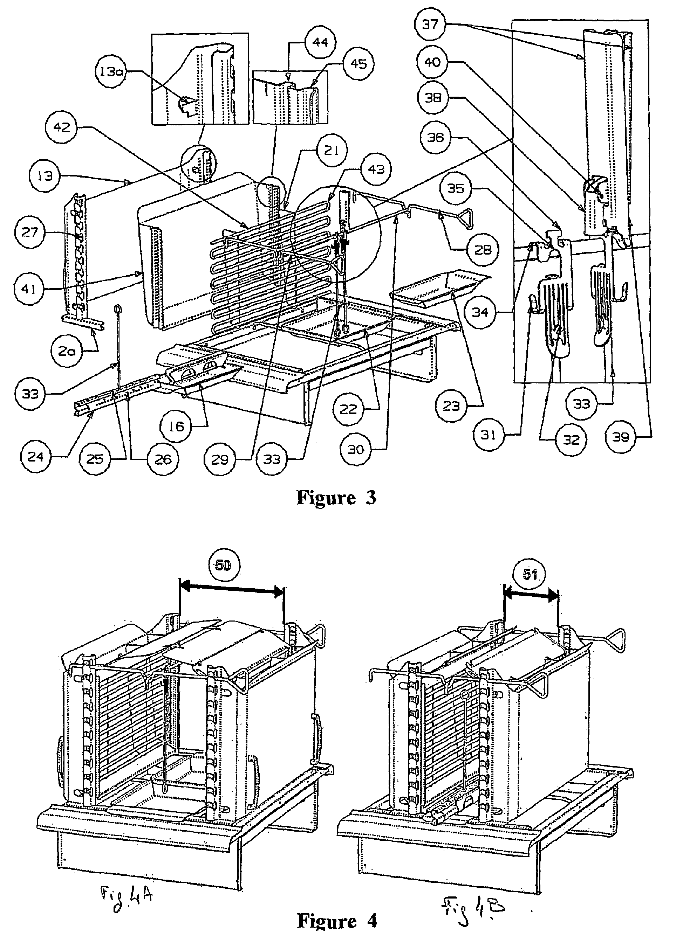

La figure **3** représente une vue éclatée d'un ensemble de foyer et de divers équipements de cuisson.
La figure **4** est une vue partielle du double foyer vertical réglable en largeur.
La figure **5** représente les foyers compartimentés pouvant être utilisés séparément ou en combinaison afin de moduler la surface de chauffe.
La figure **6** représente une vue éclatée du support de tournebroche en version manuelle avec son frein.
La figure **7** représente une vue éclatée du chariot du barbecue.
La figure **8** est une vue partielle du barbecue équipé de grilles horizontales.
La figure **9** est une vue partielle du barbecue représentant les diverses positions sorties des grilles horizontales.

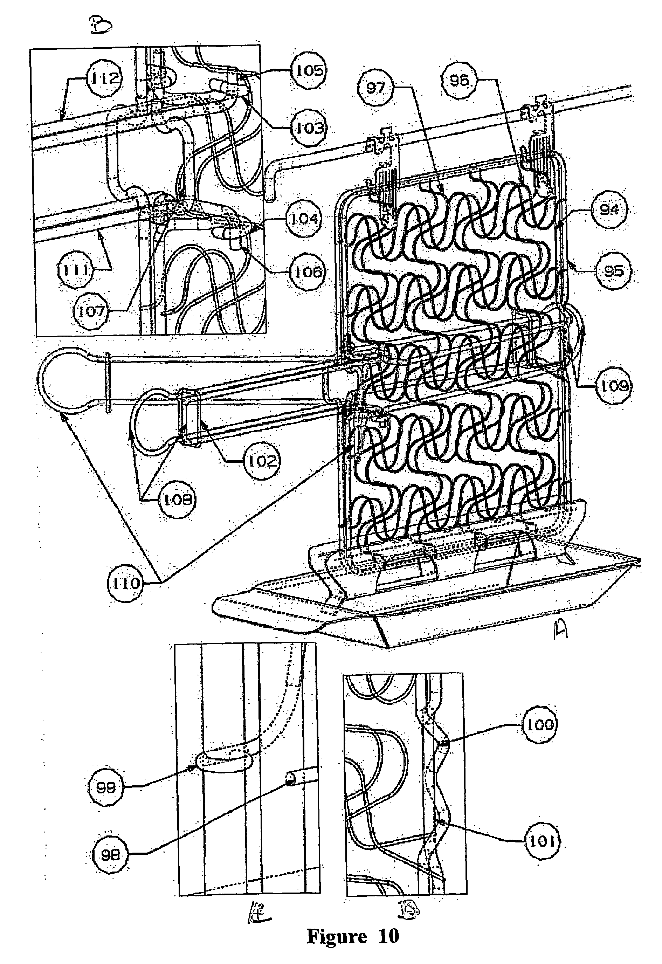

La figure **10** est une vue partielle du barbecue représentant un mode préféré de réalisation des grilles verticales support d'aliments.
La figure **11** représente un autre mode de réalisation des fixations des poignées des grilles verticales support d'aliments.
La figure **12** représente un autre mode de réalisation des fixations des poignées des grilles verticales support d'aliments (système coulissant).
La figure **13** est une vue partielle du barbecue représentant le système amovible d'allumage rapide à gaz.

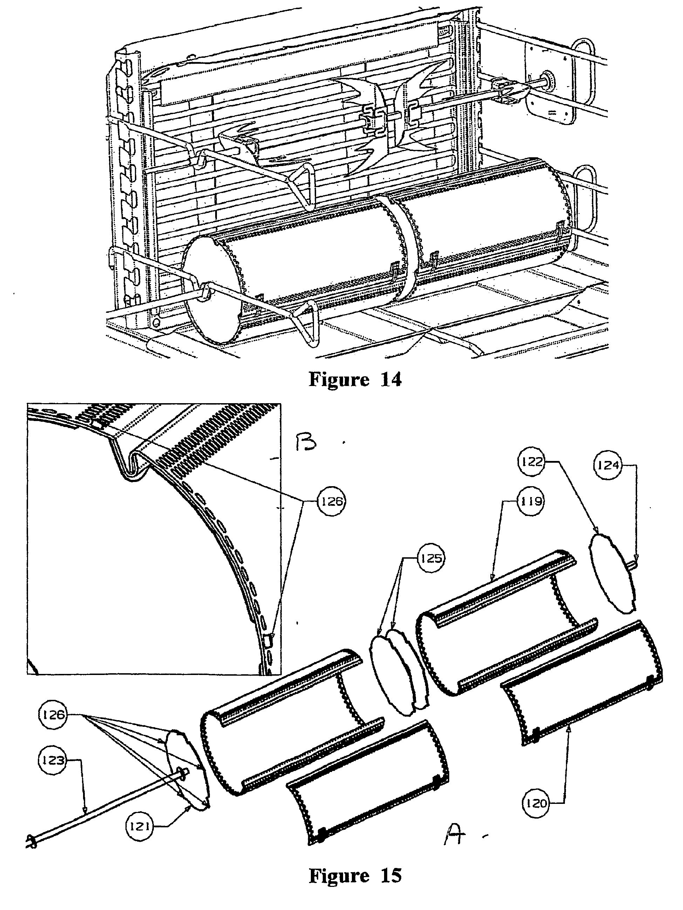

La figure **14** est une vue partielle du barbecue équipé d'une broche et de deux paniers de cuisson.
La figure **15** représente une vue éclatée du détail des paniers de cuisson.

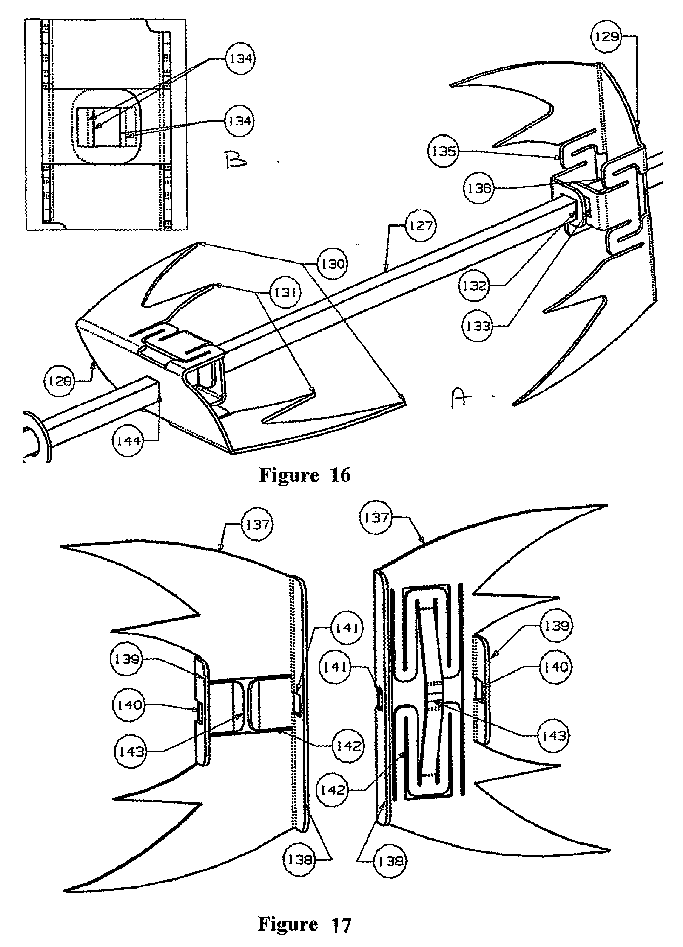

La figure **16** représente une vue de détail d'un système de broche.
La figure **17** représente deux autres modes de réalisation des fourchettes de broche.

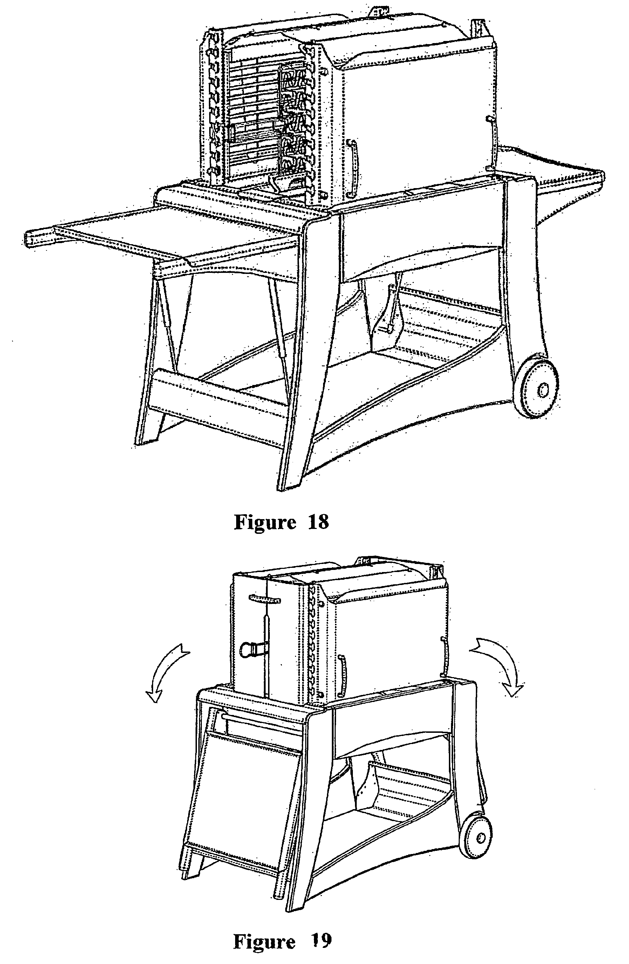

La figure **18** représente une vue de ¾ avant de l'ensemble du barbecue équipé des grilles de cuisson verticales.
La figure **19** représente une vue de ¾ avant de l'ensemble du barbecue équipé de volets verticaux, les extensions du chariot étant rabattues en position stockage ou sécurité.

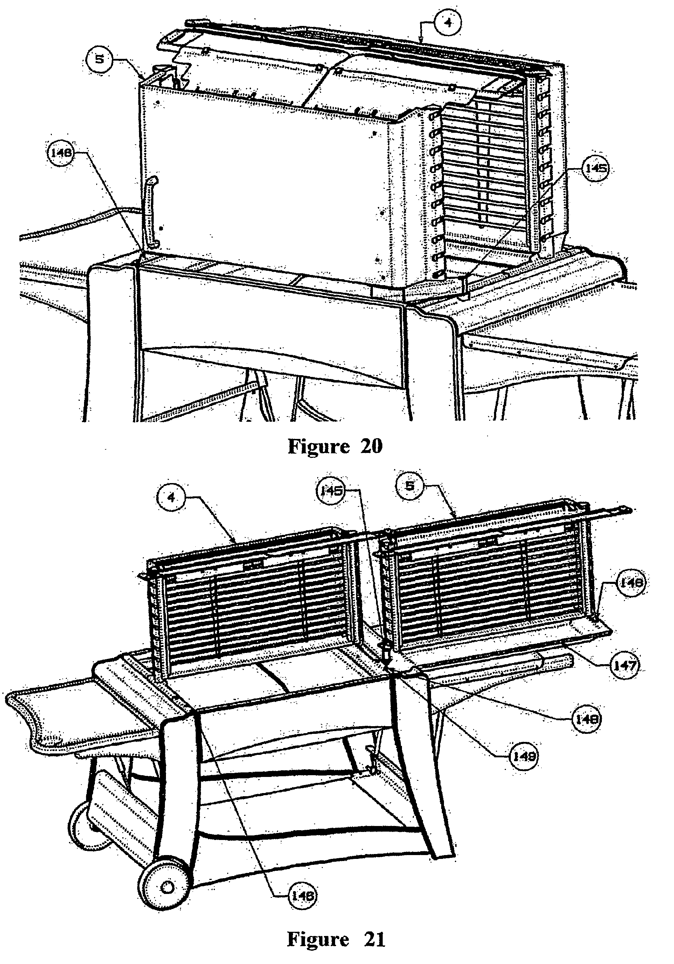

La figure **20** représente une vue de l'ensemble foyer fixé sur le châssis par un axe de rotation.
La figure **21** représente le barbecue avec un foyer ouvert en position chauffage radiant d'extérieur.

Ladite invention consiste en un barbecue à double foyers verticaux positionnés longitudinalement et réglables en largeur. En effet chacun des foyers ou ensemble foyer ou un des foyers ou ensemble foyer peut indépendamment coulisser d'une position centrale en une position la plus extérieure **(50,51).** Les foyers sont chacun constitués d'une seule face de cuisson en vis-à-vis des aliments à cuire.

A titre d'exemple, le barbecue est constitué d'un châssis **(1)** sur lequel viennent se fixer deux glissières **(2, 3).** Sur ces glissières coulissent un ou deux ensembles de foyers **(4, 5).** Ces ensembles de foyers sont chacun munis d'au moins une poignée pour faciliter le positionnement **(6).**

Ledit barbecue est à enceinte ouverte. Toutefois, il peut avantageusement être prévu que les foyers sont dans leurs parties supérieures prolongées par un ou des volets **(7, 8, 9, 10)** préférablement en matériau réfléchissants, démontables et/ou articulés en une ou plusieurs parties qui quand elles sont dépliées s'étendent respectivement vers l'élément de chauffe opposé de manière à former une voûte. Ainsi, les volets peuvent se positionner de différentes manières afin de s'adapter au mieux à la largeur variable entre les deux foyers et afin de ménager des ouvertures de taille variable pour par exemple accéder à la nourriture. Les volets sont munis de poignées extérieures **(20)** de manière à pouvoir les manipuler facilement. Ces volets sont amovibles pour pouvoir les nettoyer et éventuellement préserver leurs caractères réfléchissants.

Les foyers, de part et d'autre, à leurs extrémités longitudinales peuvent être reliés par des volets verticaux préférablement en matériau réfléchissants, démontables et/ou articulés en une ou plusieurs parties qui quand ils sont en place, relient les deux éléments de chauffe opposés de manière à former un four et augmenter la réflexion des rayonnements. Une réalisation préférée sera des volets verticaux amovibles enclipsables munis d'une ouverture pour laisser passer le tourne broche et munis d'au moins une poignée pour la manutention **(11,12).**

Une réalisation préférée de l'invention consiste à ce que lesdits foyers verticaux ne soient pas directement accessibles de l'extérieur grâce à la présence d'une paroi de protection **(13)** non directement en contact avec lesdits foyers.

Cette paroi de protection de préférence en métal peut être positionnée sur des glissières **(2,2a, 3)** fixées à la base du barbecue. Cette paroi maintient les foyers par des points de contact ponctuel **(13a),** de manière avantageuse quatre points de contacts de part et d'autre de la paroi.

Cette paroi est isolée des foyers soit par une matière isolante tel que la laine de verre **(47)** soit de manière préférée par de l'air en créant une circulation d'air frais **(46)** par le ménagement d'un espace entre la paroi de protection et le foyer.

De même, les volets verticaux pouvant fermer les extrémités des foyers ne sont pas directement accessibles de l'extérieur grâce à la présence d'une paroi de protection **(14,15)** non directement en contact avec lesdits volets hormis par quatre liaisons ponctuelles ou par l'intermédiaire d'un isolant.

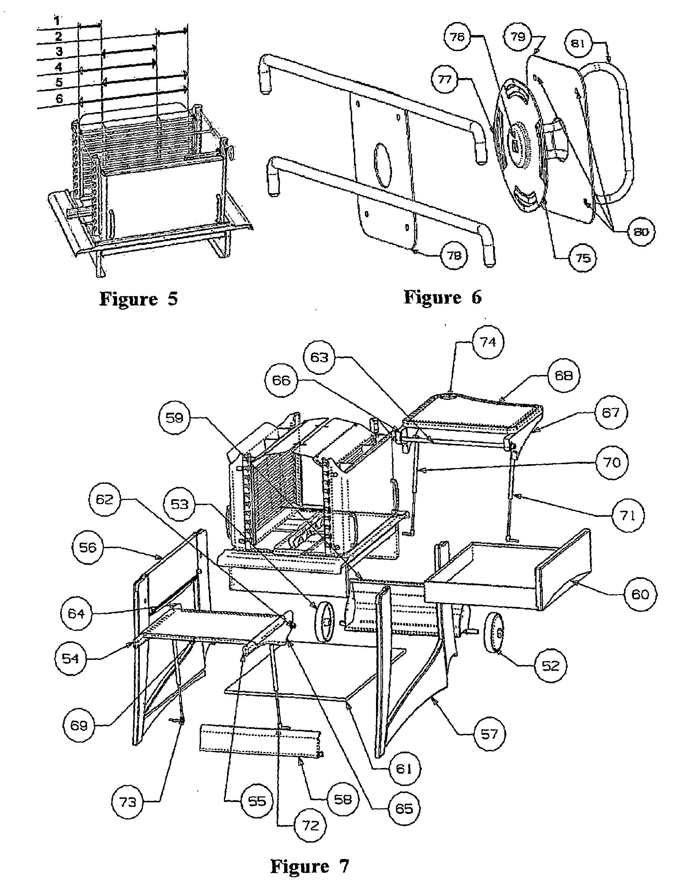

De manière avantageuse, les foyers du barbecue comprennent au moins deux compartiments ou comportent au moins deux éléments de chauffe qui peuvent être utilisés séparément ou en combinaison afin de moduler la surface de chauffe. Le foyer peut être divisé en au moins deux parties. Avantageusement, les largeurs des parties sont différentes pour multiplier les combinaisons possibles permettant ainsi de faire varier par combinaison la surface de chauffe **(****Figure 5****).** Dans le cas du chauffage par combustible solide, une cloison par exemple en métal **(21)** peut compartimenter l'espace. Dans le cas d'éléments de chauffage à gaz ou électrique, les foyers pourraient être constitués de plusieurs éléments de chauffe allumables indépendamment les uns des autres.

Le barbecue comporte au moins un bac à graisse indépendant des foyers. Il peut être déposé ou suspendu ou positionné sur une glissière sous les aliments et il est ainsi déplaçable à souhait et donc amovible pour pouvoir le vider et le nettoyer facilement, ses dimensions étant de préférence telles qu'on puisse le laver au lave-vaisselle. De manière préférentielle, le barbecue est équipé de deux bacs à graisse **(16,17)** positionnés l'un à la suinte due l'autre ayant chacune la dimension requise pour le lave-vaisselle. Les bacs à graisse peuvent être de longueur et de largeur différente **(22,23)** de manière à ce que leur taille soit adaptée à la taille des aliments. Ces bacs à graisse de manière préférentielle sont en matière réfléchissante et constituent également un élément réflecteur répartissant mieux les rayonnements et la chaleur.

De manière préférée, ledit bac à graisse est muni d'un support en forme de U orienté vers le haut **(18)** afin de recevoir le support brochette et/ou les grilles pour aliments. Le support de brochette est préférentiellement réalisé sous forme d'un profilé métallique de forme en S **(24)** percée d'une série de trous verticaux (25) traversant la partie supérieure du S et la cloison intermédiaire **(26)** constituant ainsi un support amovible à brochettes.

Les grilles verticales support de nourriture sont de manières préférentielles constituées de deux cadres métalliques **(94,95)** enserrant un réseau de barres plus fines préférentiellement élastiques formant une matrice permettant de maintenir la nourriture. De manière préférentielle cette matrice peut être constituée d'un maillage de fils de métal **(96),** préférentiellement inox de petite section, formés en une succession d'ondes de type sinusoïdale plane, juxtaposés à intervalle réguliers et entrelacés ou soudés avec une deuxième série de fils **(97)** identique de direction sensiblement perpendiculaire à la première. Tous ces fils étant soit soudés **(98)** soit sertis sur le cadre métallique **(99).** Ces deux cadres peuvent s'engager l'un dans l'autre sur un côté **(100,101)** ou être maintenu l'un avec l'autre avec un système de fermeture **(102).** Préferentiellement, les dimensions de la grille sont adaptées de manière à ce qu'elles soient lavables au lave-vaisselle. La forme de la grille étant adaptée de manière à s'encastrer dans le support en U.

De manière à optimiser les dimensions desdites grilles aux contraintes des dimensions des laves vaisselles il est préférable d'équiper celles-ci de poignées amovibles **(111,112),** clipsables ou escamotables ou pivotantes. Ainsi de manière préférentielle, les poignées seront escamotables ou pivotantes et en position rangement ou nettoyage, elles ne dépasseront guère de la surface et voir du volume de la grille utile. Un mode de réalisation peut être: les extrémités du cadre métallique sont formées de manière à constituer deux éléments de charnière femelle **(103,104),** les extrémités de la poignée sont formées de manière à constituer des éléments de charnière mâle **(105,106);** les éléments mâles ou femelles pouvant être intervertis dans un mode de réalisation différent. Une pièce complémentaire **(107)** est formée de manière à constituer une position de blocage avec un passage de point dur dû à une déformation nécessaire des éléments pour le passage de ce point. Les poignées peuvent alors passer d'une position bloquée **(108)** (service) à une position libre **(109)** (nettoyage, rangement) et toute position intermédiaire **(110).**

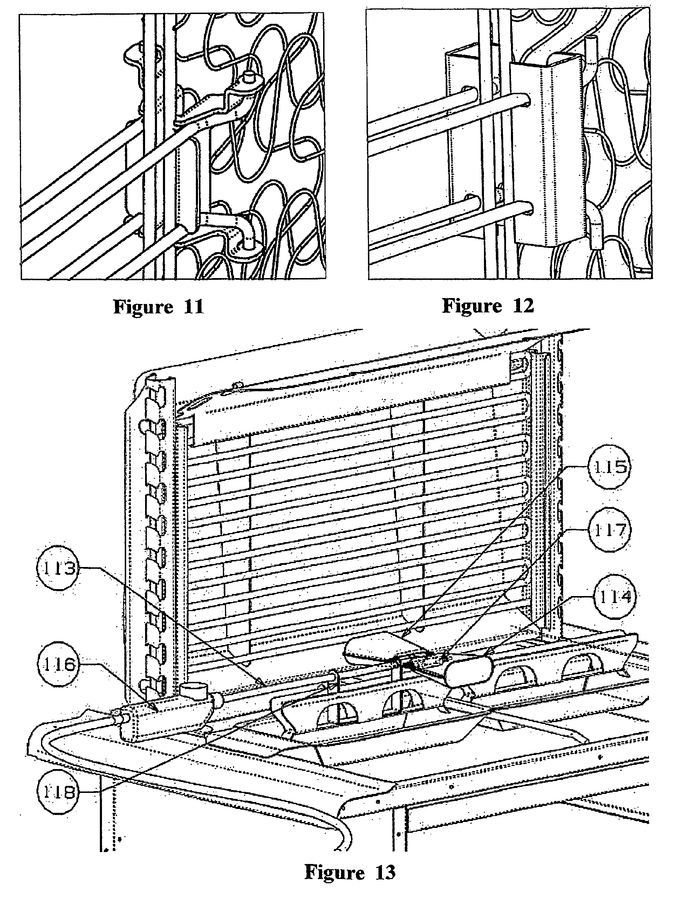

D'autres modes de réalisation, à titre indicatif, sont représentés sur la **figure 11** et un mode de réalisation par coulissement sur la **figure 12****.**

De manière préférentielle, chacune des extrémités longitudinales du barbecue au droit de chaque foyer possèdent une série encoches **(27),** préférentiellement à espacement régulier, destinée à former un ou des supports à hauteur variable pour éléments de cuisson, tels que support de rôtissoire, support de grilles, support de brochettes, support de panier de cuisson.

Ainsi sur chacun des cotés, il est possible de placer une ou plusieurs barres transversales **(28, 29)** à la hauteur désirée, ces barres servant elles même de support pour les broches, les tournebroches, les paniers tournants et autres barres longitudinales **(30)** permettant de pendre ou de fixer tout support d'aliment tel que des grilles horizontales. Ces grilles horizontales permettent de faire cuire des aliments de petite taille telle que des moules ou des huîtres ou lorsque le barbecue est entièrement fermé de s'en servir comme un four à bois et de faire cuire du pain, des pizzas, des tartes.

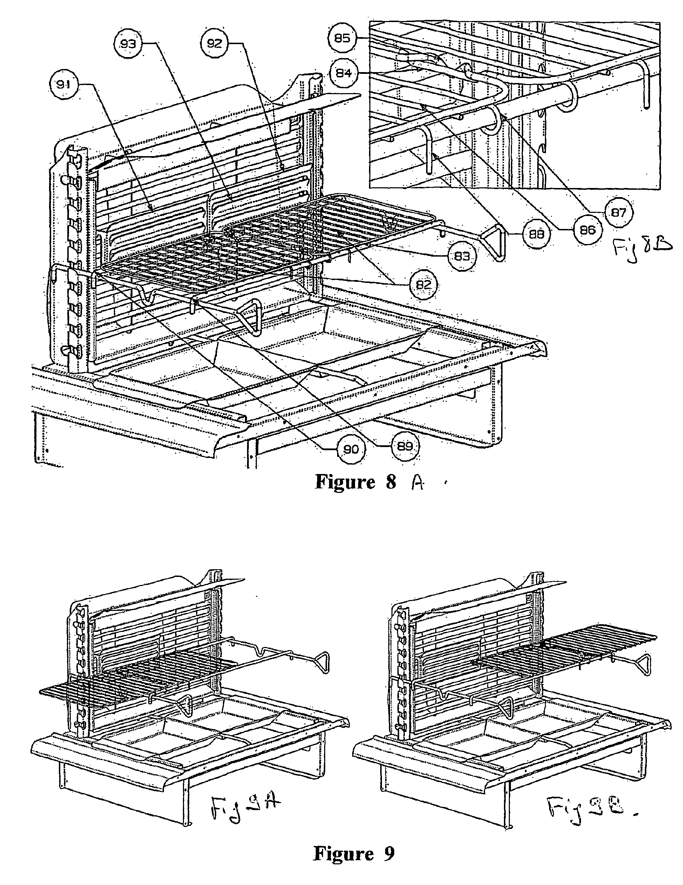

Les grilles horizontales reposent sur lesdites barres longitudinales et peuvent être extraites partiellement par coulissement sur chacun des côtés **(****Figure 9****)**.Ces grilles horizontales sont en deux parties préférentiellement pliable ou agrafables pour rentrer dans un lave vaisselle. De manière préférentielle, ces grilles sont deux grilles identiques **(82),** constituées d'un cadre métallique **(83)** comportant deux formes **(84,85)** permettant de s'agrafer l'une dans l'autre. Chaque grille comprend un réseau de barres horizontales **(86)** dont deux d'entre elles sont terminée par des formes **(87,88)** permettant de coulisser sur les barres horizontales **(89,90).**

On peut fixer sur les faces avant des foyers des écrans de protection **(91,92)** au droit des grilles horizontales pour éviter un rayonnement direct trop fort sur les aliments proches des foyers. Ces écrans comportent plusieurs ouvertures **(93)** pour favoriser la convection et rediriger le rayonnement

Les grilles verticales support d'aliment peuvent également être pendues par l'intermédiaire de supports en acier **(31).** Ces mêmes supports comportent des formes **(32)** qui permettent d'enclipser tout type de broches ou brochettes (bois ou métal) **(33).** Les formes **(34,35)** qui permettent d'accrocher ce support à la barre sont telles qu'elles permettent de positionner ce support dans au moins deux directions orientées sensiblement de 90° chacune permettant ainsi de faire griller les aliments sur quatre faces. Enfin ces dits supports comportent une forme **(36)** sur leur partie supérieure permettant de les saisir par l'intermédiaire d'une poignée amovible **(37).**

Ceci permet en s'affranchissant de la température de manutentionner les brochettes ou les grilles en toute sécurité. Cette poignée est à titre d'exemple non limitatif, constituée d'une partie fixe **(39)** et d'une partie mobile **(38)** articulée sur la partie mobile par l'intermédiaire d'un axe **(40).** Cette partie mobile vient serrer le support de grille ou de brochette lorsque l'on sert le manche. Un ressort maintient les deux parties écartées en position repos.

Un des mode de réalisation de la broche est une broche de section carrée **(127)** sur laquelle vient s'emmancher au moins deux ensembles **(128,129)** de doigts ou fourchettes **(130,131)** destinés à entraîner la nourriture en rotation.

Ces ensembles de doigts ou fourchettes peuvent être constitués d'une seule tôle inox découpée en forme et pliée de manière à former à la fois: les doigts, l'entraînement sur la broche carrée **(144)** et un frein en coulissement. Ce frein est obtenu par deux découpes supplémentaires **(132,133)** décalées **(134)** qui se réalignent sur la broche par déformation élastique des formels **(135,136).** L'efficacité du frein étant directement proportionnel à l'effort de déformation élastique de ces parties. Ceci permet l'élimination des systèmes traditionnels de guide taraudé avec vis d'arrêt et ces fourchettes de broche peuvent être utilisées également sur tout type de grill.

D'autres modes de réalisation peuvent être: une tôle inox **(137)** comportant deux plis **(138,139)** et deux encoches **(140,141)** et une découpe **(142)** de manière à ce que la ou les formes **(143)** viennent pousser ou tirer la barre carrée de la boche.

Un ou des paniers métalliques cylindriques peuvent être positionnés à la place de ou sous la broche, tournants comme la broche afin de faire cuire, rôtir, torréfier des aliments en vrac de relative petite taille. Ces paniers peuvent, de manière préférentielle, être constitués d'une portion de cylindre en tôle d'inox perforée roulée **(119),** la partie complémentaire **(120)** étant articulée ou agrafée sur la première afin de permettre le remplissage et former ainsi une porte.

De manière préférentielle, chaque extrémité du cylindre est fermée par une tôle de forme **(121,122)** agrafée amovible permettant soit de suspendre le panier avec une partie de broche **(123,124)** soit de le lier à un deuxième panier lui étant juxtaposé **(125).** La découpe de ces tôles est telle qu'elle forme des doigts **(126)** qui viennent s'emmancher dans les perforations des parties de cylindre extérieures réalisées en tôle perforée.

Les supports de tournebroche ou panier existent en version manuelle ou motorisée. Dans la version manuelle, ils comportent un frein qui maintient la broche ou le panier dans la position souhaitée. Ce frein est à titre exemple réalisé à partir d'un disque métallique **(75)** découpé et formé de manière à constituer à la fois le support de la broche **(76)** et un frein en sa périphérie grâce à des formes adéquates **(77).** Ce disque est inséré entre deux plaques: l'une fixe **(78)** et l'autre réglable **(79)** par des fixations **(80).** Ce disque supporte également une poignée **(81).**

De manière préférentielle, tous les éléments du barbecue soumis soit aux rayures soit à la chaleur sont réalisés en acier inoxydable ou tout autre matériau inaltérable et recyclable.

De manière préférentielle, tous les éléments du barbecue susceptibles d'être en contact avec les aliments ou les résidus de cuisson sont amovibles et/ou démontables et dimensionnés pour entrer dans un lave-vaisselle selon les formats standards des lave-vaisselle vendus sur le marché. De manière préférentielle aucune dimension ne dépasse 500mm et si possible la deuxième dimension ne dépasse pas 320mm.

Préférentiellement, la base du barbecue est équipée d'un ou plusieurs tiroirs faisant toute la surface du barbecue et destiné à récupérer les cendres **(19).**

De manière préférentielle, le barbecue est disposé sur un chariot comportant de manière préférentielle deux roues **(52,53)** et deux pieds fixes et des poignées de manutention **(54,55).** Le chariot est réalisé de manière préférée en éléments démontables permettant de réduire son encombrement dans le cas par exemple d'un stockage longue durée, d'un déménagement ou de la livraison. Il est constitué d'un côté droit **(56)** et d'un côté gauche **(57)** par exemple en bois, d'une traverse basse avant **(58)** et d'une traverse basse arrière **(59)** comprenant les axes de roues par exemple en métal.

Ce chariot est avantageusement équipé d'un tiroir de rangement **(60)** et dans sa partie inférieure d'un fond **(61)** formant plateforme permettant par exemple de stocker le container à gaz et/ou les réserves de combustibles solides et tout autres ustensiles nécessaires au bon fonctionnement du barbecue.

De manière préférentielle, le barbecue comprend au moins une extension rabattable ou démontable de manière à former une table de travail attenante audit barbecue. Avantageusement, il comprend une extension de chaque du barbecue, celle du côté opposé aux roues peut être équipée de poignées. Préférentiellement, l'une des extensions pourrait être réalisée dans un matériau permettant la découpe des aliments, comme par exemple le bois, et l'autre dans un matériau inaltérable, lavable et insensible aux rayures comme l'acier inoxydable. Leurs formes pourraient avantageusement prévoir la récupération des jus par exemple par la présence de canaux **(74)** tout au long des bords de la planche. A titre d'exemple ces extensions sont constituées: d'un ensemble d'axe en métal **(62,63),** de deux longerons en bois formant poignée sur l'avant **(64,65,66,67)** et d'une surface de travail, en bois formant table de découpe sur l'arrière **(68),** en acier inox sur l'avant **(69).** Les configurations pouvant être identiques on inversées.

De manière préférentielle, lesdites extensions se rabattent automatiquement sous l'effet d'une surcharge. Cette surcharge est calculée pour éviter tout risque de basculement du barbecue par exemple sous le poids d'un enfant se pendant à l'extrémité de l'une des extensions ou d'un adulte s'appuyant malencontreusement à l'extrémité d'une de ces extensions. Avantageusement, ces extensions seront tenues ouvertes par des compas à gaz **(70,71,72,73)** dont les efforts correspondront à cette surcharge. Ces même compas à gaz tiennent les extensions en position rabattue pour le stockage.

Les foyers du barbecue sont composés d'un ou plusieurs éléments de chauffe de tailles préférentiellement différentes pouvant être utilisés séparément ou en combinaison comme expliqué précédemment Ces éléments de chauffe peuvent être composés soit de tubes radiants gaz soit de résistances électriques soit de tubes radiants électriques ou de panneaux radiants gaz ou électriques. De manière préférentielle, dans le cas de tubes radiants, ils forment une sorte de serpentin ou de réseau.

Préférentiellement les foyers sont composés de containers de forme relativement parallélépipédique destinés à recevoir du combustible solide tel que du charbon de bois. Ces containers **(41)** sont constitués de quatre faces, le dessous, le fond et les deux cotés, en matériau plein résistant à la chaleur et inaltérable tel que de la tôle d'acier inoxydable.

En revanche, le dessus reste ouvert permettant d'un part le remplissage à tout moment et en cours de cuisson et permettant également l'évacuation des gaz chauds et des fumées de combustion et assurant ainsi le réchauffement du combustible et la propagation de l'allumage du combustible.

Enfin, la face avant **(42),** coté enceinte du barbecue, est constituée d'un ou plusieurs éléments de matériaux résistant à une température élevée et inaltérable tels que de l'inox réfractaire formant des ouvertures suffisamment grandes pour laisser passer un maximum de rayonnement directe du combustible incandescent mais aussi suffisamment étroites pour empêcher l'écoulement du combustible vers l'enceinte du barbecue. Ces ouvertures sont par exemple de forme oblongue et préférentiellement d'une largeur de 20mm et d'un pas de 30mm. Elles sont placées préférentiellement dans une direction horizontale de manière à freiner l'écoulement naturel du combustible dans le container. Une réalisation préférée pouvant être un fil d'acier inox continu cintré en lacet dans un plan vertical de manière à former un réseau de fils parallèles espacés de manière régulière **(43).** Le pas entre chaque fil peut varier dans la hauteur afin d'optimiser les facteurs d'écoulement du combustible dans le foyer et du non écoulement du combustible à l'extérieur du foyer et du rayonnement maximum; par exemple, plus resserré en bas et plus espacé en haut.

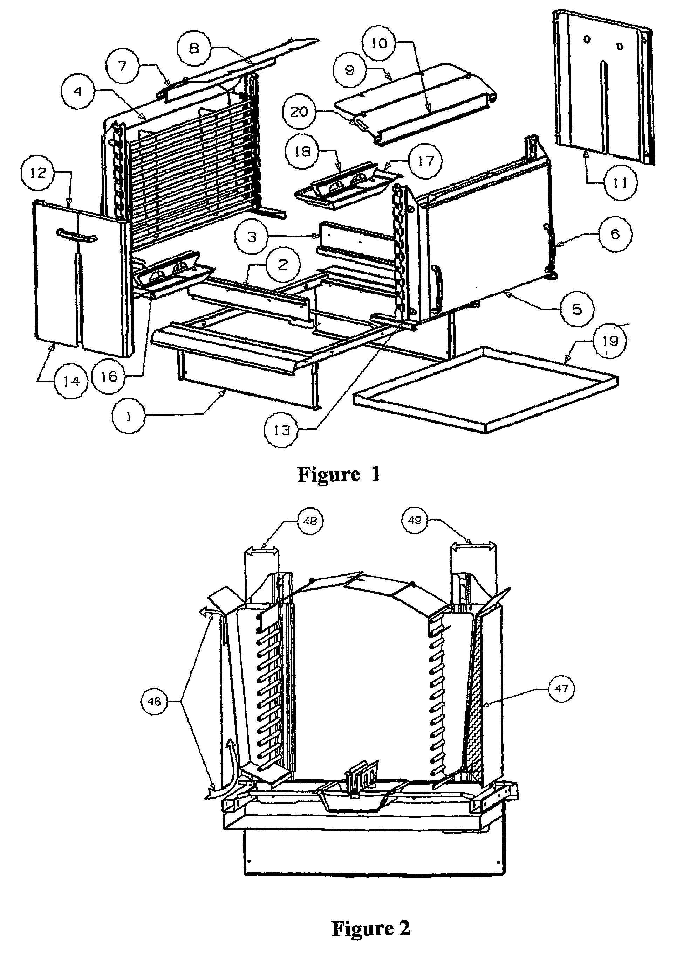

Avantageusement la forme du container est légèrement conique évasée vers le haut, plus large en haut et plus resserrée en bas, ce qui permet de freiner l'écoulement du combustible et son resserrement vers la face avant. Dans la partie supérieure du container, la forme s'évase plus franchement ce qui combiné aux volets formant voûte qui sont eux-mêmes évasés par rapport au container permet un remplissage aisé du container en combustible même pendant la cuisson, les valets formant protection et évitant toute pollution des aliments par le combustible ou la poussière de combustible. **(****Figure 2****)**

La face avant du container n'est pas fixe mais amovible et pouvant prendre plusieurs positions verticales parallèles **(48,49)** permettant de faire varier l'épaisseur du container et donc la quantité de combustible stockée dans ledit container et donc participant à la combustion. Ceci permet donc d'adapter la quantité de combustible intéressée à la cuisson en fonction du type de cuisson que l'on veut réaliser et donc de pouvoir, outre régler la puissance mise en jeu, également économiser du combustible pour une cuisson de courte durée. Un mode de réalisation préférentielle pourra être, par exemple, des glissières parallèles successives **(44,45)** formées par enfoncement dans les faces latérales; glissières dans lesquelles l'utilisateur peut aisément emmancher la face avant du container pouvant ainsi ajuster à sa convenance la capacité dudit container.

Le barbecue est équipé d'un système d'allumage rapide à gaz.

L'un des modes de réalisation possible est un système fixe, constitué de deux rampes, une sous chaque foyer, constituée chacune de plusieurs injecteurs et tuyères répartis dans la longueur du foyer et débouchant dans la partie basse des containers. Il suffit alors d'actionner ce système pendant une ou deux minutes pour allumer le combustible solide

Dans un autre mode de réalisation préférentiel, ce système est amovible, constitué d'un chalumeau manuel aéro-gaz butane équipé d'une lance **(113)** constituée de deux brûleurs préférentiellement à flamme plate **(114,115)** montés en opposition l'un de l'autre à environ 180° l'un de l'autre et approximativement perpendiculairement au manche du chalumeau **(116).** Chaque brûleur comprend au moins injecteur à gaz **(117).** Le chalumeau peut être tenu dans la main ou posé et maintenu en position correcte dans la forme en U du bac à graisse grâce à une forme adaptée présente sur la lance **(118).** Il suffit alors de le laisser dans cette position entre 40 et 120 secondes pour allumer le foyer sur une largeur d'environ 150mm. L'utilisateur commence alors par le centre et recommence une ou deux fois en ayant déplacé le chalumeau vers l'extérieur puis en procédant de manière identique de l'autre coté du barbecue.

Ce type d'équipement ainsi que le container à gaz est stocké sur la plateforme inférieur du chariot.

Ce même équipement pouvant exister avec un seul ou plusieurs brûleurs et tuyères sensiblement en ligne ou avec un léger angle par rapport au tube de la lance pour une utilisation avec des barbecues n'ayant pas deux foyers face à face rapprochés. La longueur totale de la lance avec le brûleur sera comprise entre 300 et 500mm.

Un seul foyer ou ensemble de foyer **(4)** peut coulisser sur toute la largeur du châssis, l'autre foyer ou ensemble de foyer **(5)** est alors fixé au châssis par l'intermédiaire d'un axe vertical **(145)** ou d'un ensemble d'axes (axe virtuel) et au moins une fixation amovible **(146).** En fin de cuisson, ou à tout moment, on peut alors faire pivoter ledit foyer ou ensemble de foyer **(5)** fixé an châssis d'environ 180° sur l'axe vertical **(145),** les deux foyers ou ensemble foyer**(4)** et **(5)** étant in-fine sensiblement en prolongement l'un de l'autre, formant ainsi un double panneau radiant qui constitue un très efficace chauffage radiant d'extérieur ou une cheminée d'agrément d'extérieur dans le cas de combustible solide.

Un bac de récupération de cendres **(147)** se place sous le foyer ou l'ensemble foyer **(5)** et constitue en même temps l'arrêt en rotation de l'ensemble par l'intermédiaire des fixations **(148,149).**

Ce principe peut s'appliquer sur plusieurs foyers ou ensembles foyers.

## Revendications

1. Barbecue à combustible solide comprenant un châssis (1) et deux ensembles de foyers (4,5) verticaux dont l'un au moins est réglable en largeur (50,51) par rapport au châssis (1), lesdits ensembles de foyers (4, 5) ayant chacun une seule face de cuisson en vis-à-vis des aliments à cuire, lesdits ensembles de foyers comprennent chacun un container (41) formant foyer et comportant notamment une face avant (42) définissant la face de cuisson et une face arrière non-ajourée opposée à la face avant (42), **caractérisé en ce que** lesdits ensembles de foyers comprennent en outre chacun une paroi de protection (13) non-ajourée, isolée, non directement en contact avec le container (41) et s'étendant en regard de la face arrière non-ajourée du container.

2. Barbecue selon revendication 1 **caractérisé en ce que** ledit barbecue est à enceinte ouverte.

3. Barbecue selon l'une quelconque des revendications précédentes ayant deux foyers verticaux en vis-à-vis **caractérisé en ce que** les foyers sont dans leurs parties supérieures prolongées par un ou des volets (7,8,9,10) préférablement en matériau réfléchissants, démontables et/ou articulés en une ou plusieurs parties qui quand elles sont dépliées s'étendent respectivement vers l'élément de chauffe opposé de manière à former une voûté.

4. Barbecue selon la revendication 3 **caractérisé en ce que** les foyers, à leurs extrémités peuvent être reliés par des volets verticaux (11,12) préférentiellement en matériau réfléchissants, démontables et/ou articulés en une ou plusieurs parties.

5. Barbecue selon la revendication précédente **caractérisé en ce que** lesdits volets verticaux ne sont pas directement accessibles de l'extérieur grâce à la présence d'une paroi de protection isolée non directement en contact avec lesdits foyers (14).

6. Barbecue selon l'une quelconque des revendications précédentes **caractérisé en ce que** lesdits containers (41) comprennent au moins 2 compartiments ou éléments de chauffe qui peuvent être utilisés séparément ou en combinaison afin de moduler la surface de chauffe (Figure 5).

7. Barbecue selon l'une quelconque des revendications précédentes **caractérisé en ce qu'**il comporte au moins un bac à graisse indépendant des foyers et amovible (16,17,22,23).

8. Barbecue selon la revendication 7 **caractérisé en ce que** ledit bac à graisse, amovible est muni d'un support en forme de U orienté vers le haut (18) afin de recevoir le support brochette et/ou les grilles pour aliments.

9. Barbecue selon l'une quelconque des revendications précédentes **caractérisé en ce que** le support de brochette est réalisé sous forme d'un profilé métallique de forme en S (24-26) percée d'une série de trous verticaux traversant la partie supérieure et la cloison intermédiaire du S.

10. Barbecue selon l'une quelconque des revendications précédentes **caractérisé en ce que** ledit barbecue comprend à chacune de ses extrémités longitudinales au droit de chaque ensemble de foyer au moins une encoche (27) destinée à former un ou plusieurs supports à hauteur variable pour déments de cuisson.

11. Barbecue selon l'une quelconque des revendications précédentes **caractérisé en ce que** l'on peut installer entre les deux foyers au moins une grille horizontale (82-90) fixe ou extractible partiellement par coulissement.

12. Barbecue selon l'une quelconque des revendications précédentes **caractérisé en ce que** sur chacun des ensembles de foyers on peut installer au moins un écran de protection aux rayonnements (91,92) au droit des grilles horizontales.

13. Barbecue selon l'une quelconque des revendication précédentes **caractérisé en ce que** tous les éléments susceptibles d'être en contant avec les aliments ou les résidus de cuisson sont amovibles et/ou démontables et dimensionnés pour entrer dans un lave-vaisselle.

14. Barbecue selon l'une quelconque des revendications précédentes comprenant au moins une extension rabattable ou démontable **caractérisé en ce que** lesdites extensions se rabattent automatiquement sous l'effet d'une surcharge (62-74).

15. Barbecue à combustibles solides selon la revendication 14 **caractérisé en ce que** la face avant (42) desdits foyers est munie d'ouvertures, préférentiellement de formes allongées et orientées horizontalement (43) de manière à ralentir la descente du combustible dans le foyer.

16. Barbecue selon la revendication 15 **caractérisé en ce que** lesdites ouvertures sont de dimension variable dans la hauteur.

17. Barbecue selon l'une quelconque des revendications 15 et 16 **caractérisé en ce que** lesdits containers (41) sont sensiblement parallélépipédiques de forme conique évasé vers le haut de manière à ralentir la descente du charbon dans le foyer et/ou la partie supérieure dudit container reste ouverte et est largement évasée de manière à faciliter le chargement en combustible.

18. Barbecue selon l'une quelconque des revendications 15 à 17 **caractérisé en ce que** ladite face avant (42) est déplaçable dans ledit ensemble de foyer (44,45,48,49) afin de faire varier l'épaisseur dudit container et donc la quantité du combustible dans ledit container.

19. Barbecue selon l'une quelconque des revendications précédentes **caractérisé en ce qu'**il comporte au moins un allumage à gaz fixe ou amovible (113-118).

20. Barbecue selon l'une quelconque des revendications précédentes **caractérisé en ce qu'**il comporte des supports métalliques permettant de suspendre les grilles verticales support d'aliments et d'accrocher tout type de broches et de suspendre ces broches dans au moins deux directions (31-35).

21. Barbecue selon l'une quelconque des revendications précédentes **caractérisé en ce que** les grilles qui servent à supporter ou maintenir les aliments pendant la cuisson et à amener et retirer les aliments de l'enceinte du barbecue sont munies de poignées amovibles, agrafables ou escamotables ou pivotantes (103-112).

22. Barbecue selon l'une quelconque des revendications précédentes **caractérisé en ce que** les grilles qui servent à supporter ou maintenir les aliments pendant la cuisson sont constituées d'un maillage de fils de métal formés en une succession d'ondes de type sinusoïdale plane, juxtaposés à intervalle réguliers et entrelacés ou soudés avec une deuxième série de fils identique de direction sensiblement perpendiculaire à la première (96-99).

23. Barbecue selon l'une quelconque des revendications précédentes **caractérisé en ce qu'**un ou des paniers métalliques cylindriques peuvent être positionnés à la place de ou sous la broche, tournants comme la broche (119-126).

24. Barbecue selon l'une quelconque des revendications précédentes **caractérisé en ce que** les fourchettes de la broche sont réalisées à partir d'une seule tôle découpée et pliée formant entraînement, guide et frein longitudinal (127-144).

25. Barbecue selon l'une quelconque des revendications précédentes ayant au moins un ensemble de foyer articulé qui peut se transformer par rotation en chauffage radiant ou cheminée d'agrément extérieur.

26. Barbecue selon l'une quelconque des revendications précédentes **caractérisé en ce que** les containers (41) comprennent en outre une face de dessous et deux faces de côté non-ajourées.

## Claims

1. Solid fuel barbecues comprising a frame (1) and two vertical firebox units (4, 5) of which at least one is adjustable in width (50, 51) in rotation to the frame (1), said firebox units (4, 5) each having a single cooking surface facing the food to be cooked, said firebox units each include a container (41) forming a firebox and comprising in particular a front surface (42) defining the cooking surface and a rear non-perforated surface opposite the front surface (42), **characterised in that** said firebox units each further include a non-perforated insulated protective wall (13), not directly in contact with the container (41) and extending across from the rear non-peribrated surface of the container.

2. Barbecue according to claim 1 **characterised in that** said barbecue is an open chamber.

3. Barbecue according to any of the preceding claims having two facing vertical fireboxes **characterised in that** the fireboxes are in their upper portions extended by one or more flaps (7, 8, 9, 10) preferably of reflective material, which can be removed and/or articulated at one or several portions which, when they are unfolded, extend respectively towards the opposite heating element in such a way as to form a crown.

4. Barbecue according to claim 3 **characterised in that** the fireboxes, at their ends can be connected by vertical flaps (11, 12) preferentially of reflective material, which can be removed and/or articulated at one or several portions.

5. Barbecue as claimed in the preceding claim **characterised in that** said vertical flaps are not directly accessible, from the exterior thanks to the presence of an insulated protective wall which is not directly in contact with said fireboxes (14).

6. Barbecue according to any of the preceding claims **characterised in that** said containers (41) include at least 2 compartments or heating elements which can be used separately or in combination in order to adjust the heating surface (Figure 5).

7. Barbecue according to any of the preceding claims **characterised in that** it comprises at least one grease tray independent of the fireboxes and which can be removed (16, 17, 22,23).

8. Barbecue according to claim 7 **characterised in that** said grease tray, removable, is provided with a U-shaped support directed upwards (18) in order to receive the brochette support and/or the grills for food.

9. Barbecue according to any of the preceding claims **characterised in that** the brochette support is carried out in the form of an S-shaped metal section (24-26) pierced with a series of vertical holes passing through the upper portion and the intermediary wall of the S.

10. Barbecue according to any of the preceding claims **characterised in that** said barbecue comprises at each of its longitudinal ends at the level of each firebox unit at least one notch (27) intended to form one or several variable height supports for cooking elements.

11. Barbecue according to any of the preceding claims **characterised in that** at least one horizontal grill (82-90) that is fixed or partially extractible via sliding can be installed between the two fireboxes.

12. Barbecue according to any of the preceding claims **characterised in that** at least one radiation protective screen (91, 92) can be installed on each of the firebox units at the level of the horizontal grills.

13. Barbecue according to any of the preceding claims **characterised in that** all of the elements likely to be contact with the food or cooking residue are movable and/or can be removed and sized to fit into a dishwasher.

14. Barbecue according to any of the preceding claims comprising at least one folding or removable extension **characterised in that** said extensions automatically fold back under the effect of an overload (62-74).

15. Solid fuel barbecue according to claim 14 **characterised in that** the front surface (42) of said fireboxes is provided with openings, preferably of elongated form and horizontally directed (43) in such a way as to slow down the descent of the fuel in the firebox.

16. Barbecue according to claim 15 **characterised in that** said openings are of a variable dimension in function of height.

17. Barbecue according to any of claims 15 and 16 **characterised in that** said containers (41) are substantially parallelepiped of tapered form expanding upwards in such a way as to slow down the descent of coal in the firebox and/or the upper portion of said container remains open and is widely expanded in such a way as to facilitate the loading of fuel.

18. Barbecue according to any of claims 15 to 17 **characterised in that** said front surface (42) can be moved in said firebox unit (44, 45, 48, 49) in order to vary the thickness of said container and as such the quantity of fuel in said container.

19. Barbecue according to any of the preceding claims **characterised in that** it comprises at least one fixed or removable gas lighting (113-118).

20. Barbecue according to any of the preceding claims **characterised in that** it comprises metal supports making it possible to suspend the vertical food support grills and to attach any type of spits and to suspend these spits in a least two directions (31-35).

21. Barbecue according to any of the preceding claims **characterised in that** the grills that are used to support or maintain the food during cooking and to bring and remove the food from the chamber of the barbecue are provided with handles that are removable, with folded seams or retractable or pivoting (103-112).

22. Barbecue according to any of the preceding claims **characterised in that** the grills that are used to support or maintain the food during cooking are comprised of a mesh of metal wires formed as a succession of waves of the plane sinusoidal type, Juxtaposed at regular intervals and interlaced or welded with a second series of identical wires in a direction substantially perpendicular to the first (96-99).

23. Barbecue according to any of the preceding claims **characterised in that** one or more metal cylindrical baskets can be positioned in place of or under the spit, turning likewise as the spit (119-126).

24. Barbecue according to any of the preceding claims **characterised in that** the forks of the spit are carried out using a single sheet of cut and folded sheet metal forming driving, guide and longitudinal brake (127-144).

25. Barbecue according to any of the preceding claims having at least one articulated firebox unit which can be transformed via rotation into radiant heat or pleasant outdoor chimney.

26. Barbecue according to any of the preceding claims **characterised in that** the containers (41) further include an underneath surface and two non-perorated side surfaces.

## Patentansprüche

1. Barbecue-Grill für festen Brennstoff, der ein Gestell (1) und zwei senkrechte Einheiten von Feuerkammern (4, 5) enthält, von denen mindestens eine bezüglich des Gestells (1) in der Breite verstellbar ist (50, 51), wobei die Einheiten von Feuerkammern (4, 5) je eine einzige Garseite gegenüber dem Gargut haben, wobei die Einheiten von Feuerkammern je einen eine Feuerkammer bildenden Behälter (41) enthalten und insbesondere eine Vorderseite (42), die die Garseite definiert, und eine nicht gelochte Rückseite entgegengesetzt zur Vorderseite (42) aufweisen, **dadurch gekennzeichnet, dass** die Einheiten von Feuerkammern außerdem je eine isolierte, nicht gelochte Schutzwand (13) enthalten, die nicht direkt mit dem Behälter (41) in Kontakt steht und sich vor der nicht gelochten Rückseite des Behälters erstreckt.

2. Barbecue-Grill nach Anspruch 1, **dadurch gekennzeichnet, dass** der Barbecue-Grill einen offenen Raum hat.

3. Barbecue-Grill nach einem der vorhergehenden Ansprüche, der zwei einander gegenüberliegende senkrechte Feuerkammern hat, **dadurch gekennzeichnet, dass** die Feuerkammern in ihren oberen Bereichen von einer oder mehreren Klappen (7, 8, 9, 10), vorzugsweise aus reflektierendem Material, verlängert werden, die abmontierbar und/oder in einem oder mehreren Bereichen mit Gelenk versehen sind, die, wenn sie auseinandergebreitet sind, sich je zum gegenüberliegenden Heizelement erstrecken, um ein Gewölbe zu bilden.

4. Barbecue-Grill nach Anspruch 3, **dadurch gekennzeichnet, dass** die Feuerkammern an ihren Enden durch senkrechte Klappen (11, 12), vorzugsweise aus reflektierendem Material, verbunden sein können, die abmontierbar und/oder in einem oder mehreren Bereichen mit Gelenk versehen sind.

5. Barbecue-Grill nach dem vorhergehenden Anspruch, **dadurch gekennzeichnet, dass** die senkrechten Klappen aufgrund des Vorhandenseins einer isolierten Schutzwand, die nicht direkt mit den Feuerkammern (14) in Kontakt steht, nicht direkt von außen zugänglich sind.

6. Barbecue-Grill nach einem der vorhergehenden Ansprüche, **dadurch gekennzeichnet, dass** die Behälter (41) mindestens zwei Heizabteile oder Heizelemente enthalten, die getrennt oder kombiniert verwendet werden können, um die Heizfläche zu modulieren (Figur 5).

7. Barbecue-Grill nach einem der vorhergehenden Ansprüche, **dadurch gekennzeichnet, dass** er mindestens eine von den Feuerkammern unabhängige und entfernbare Fettschale (16, 17, 22, 23) aufweist.

8. Barbecue-Grill nach Anspruch 7, **dadurch gekennzeichnet, dass** die entfernbare Fettschale mit einem nach oben gerichteten, U-förmigen Träger (18) versehen ist, um den Spießhalter und/oder die Roste für Gargut aufzunehmen.

9. Barbecue-Grill nach einem der vorhergehenden Ansprüche, **dadurch gekennzeichnet, dass** der Spießhalter in Form eines S-förmigen metallischen Profilteils (24-26) hergestellt ist, das eine Reihe von senkrechten Löchern aufweist, die den oberen Bereich und die Zwischenwand des S durchqueren.

10. Barbecue-Grill nach einem der vorhergehenden Anspruche, **dadurch gekennzeichnet, dass** der Barbecue-Grill an jedem seiner Längsenden im rechten Winkel zu jeder Einheit von Feuerkammern mindestens eine Aussparung (27) aufweist, die dazu bestimmt ist, einen oder mehrere höhenverstellbare Halter für Garelemente zu formen.

11. Barbecue-Grill nach einem der vorhergehenden Ansprüche, **dadurch gekennzeichnet, dass** zwischen den zwei Feuerkammern mindestens ein waagrechter Rost (82-90) montiert werden kann, der fest oder teilweise durch Gleiten herausziehbar ist.

12. Barbecue-Grill nach einem der vorhergehenden Ansprüche, **dadurch gekennzeichnet, dass** auf jede der Einheiten von Feuerkammern mindestens ein Strahlenschutzschirm (91, 92) im rechten Winkel zu den waagerechten Rosten montiert werden kann.

13. Barbecue-Grill nach einem der vorhergehenden Ansprüche, **dadurch gekennzeichnet, dass** alle Elemente, die mit dem Gargut oder mit den Gargutresten in Kontakt kommen können, entfernbar und/oder abmontierbar und so bemessen sind, dass sie in einen Geschirrspüler passen.

14. Barbecue-Grill nach einem der vorhergehenden Ansprüche, der mindestens eine umklappbare oder abmontierbare Erweiterung enthält, **dadurch gekennzeichnet, dass** die Erweiterungen sich automatisch unter der Winkung einer Überbelastung (62-74) umklappen.

15. Barbecue-Grill für festen Brennstoff nach Anspruch 14, **dadurch gekennzeichnet, dass** die Vorderseite (42) der Feuerkammern mit Öffnungen versehen ist, vorzugsweise von länglicher Form und waagrecht ausgerichtet (43), um das Absinken des Brennstoffs in den Feuerkammer zu verlangsamen.

16. Barbecue-Grill nach Anspruch 15, **dadurch gekennzeichnet, dass** die Öffnungen eine in der Höhe variable Abmessung haben.

17. Barbecue-Grill nach einem der Ansprüche 15 und 16, **dadurch gekennzeichnet, dass** die Behälter (41) im Wesentlichen parallelepipedisch von sich nach oben erweiternder Kegelform sind, um das Absinken der Kohle in die Feuerkammer zu verlangsamen, und/oder der obere Bereich des Behälters offen bleibt und stark erweitert ist, um das Beladen mit Brennstoff zu erleichtern.

18. Barbecue-Grill nach einem der Ansprüche 15 bis 17, **dadurch gekennzeichnet, dass** die Vorderseite (42) in der Feuerkammereinheit (44, 45, 48, 49) verschiebbar ist, um die Dicke des Behälters und somit die Menge an Brennstoff im Behälter zu variieren.

19. Barbecue-Grill nach einem der vorhergehenden Ansprüche, **dadurch gekennzeichnet, dass** er mindestens eine feste oder entfernbare Gaszündung (113-118) aufweiset.

20. Barbecue-Grill nach einem der vorhergehenden Ansprüche, **dadurch gekennzeichnet, dass** er Metallhalter aufweist, die es ermöglichen, die senkrechten Gargut-Tragroste aufzuhängen und jede Art von Spießen zu befestigen, und diese Spieße in mindestens zwei Richtungen aufzuhängen (31-35).

21. Barbecue-Grill nach einem der vorhergehenden Ansprüche, **dadurch gekennzeichnet, dass** die Roste, die zum Tragen oder Halten des Garguts während des Garens und zum Zuführen und zum Entnehmen des Garguts aus dem Raum des Barbecue-Grills dienen, mit entfernbaren, festklammerbaren oder einziehbaren oder schwenkbaren Griffen (103-112) versehen sind.

22. Barbecue-Grill nach einem der vorhergehenden Ansprüche, **dadurch gekennzeichnet, dass** die Roste, die zum Tragen oder Halten des Garguts während des Garens dienen, aus einem Maschennetz von Metalldrähten bestehen, die in einer Folge von sinusförmigen ebenen Wellen geformt, in regelmäßigen Abständen nebeneinander angeordnet und mit einer zweiten gleichen Reihe von Drähten einer Richtung im Wesentlichen lotrecht zur Ersten (96-99) verflochten oder verschweißt sind.

23. Barbecue-Grill nach einem der vorhergehenden Ansprüche, **dadurch gekennzeichnet, dass** ein oder mehrere zylindrische Metallkörbe anstelle des oder unter dem Spieß angeordnet werden können, die sich wie der Spieß drehen (119-126).

24. Barbecue-Grill nach einem der vorhergehenden Ansprüche, **dadurch gekennzeichnet, dass** die Klammern des Spießes ausgehend von einem einzigen ausgeschnittenen und gefalteten Blech hergestellt werden und einen Antrieb, eine Führung und eine Längsbremse (127-144) bilden.

25. Barbecue-Grill nach einem der vorhergehenden Ansprüche, der mindestens eine mit Gelenk versehene Feuerkammer-Einheit hat, die durch Drehen in einen Heizstrahler oder einen Außen-Zierkamin verwandelt werden kann.

26. Barbecue-Grill nach einem der vorhergehenden Ansprüche, **dadurch gekennzeichnet, dass** die Behälter (41) außerdem eine Unterseite und zwei nicht gelochte Seitenflächen enthalten.
